# EUROPÄISCHE PATENTSCHRIFT

(11) **EP 3 013 634 B1**
(45) Veröffentlichungstag und Bekanntmachung des Hinweises auf die Patenterteilung: **30.01.2019**
(21) Anmeldenummer: 14738763.3
(22) Anmeldetag: 27.06.2014
(51) Int. Cl.: B60N 2/90, B60N 2/16, B60N 2/04

(54) **VERSTELLVORRICHTUNG MIT EINEM FESTEN ELEMENT, EINEM VERSTELLBAREN ELEMENT UND EINER ERSTEN ARRETIERUNGSVORRICHTUNG**
ADJUSTER DEVICE HAVING A FIXED ELEMENT, AN ADJUSTABLE ELEMENT AND A FIRST LOCKING DEVICE
DISPOSITIF DE RÉGLAGE COMPRENANT UN ÉLÉMENT FIXE, UN ÉLÉMENT RÉGLABLE ET UN PREMIER SYSTÈME DE BLOCAGE

(30) Priorität: 28.06.2013 DE 102013212749; 16.08.2013 DE 102013013510
(43) Veröffentlichungstag der Anmeldung: 04.05.2016
(73) Patentinhaber: Adient Luxembourg Holding S.à r.l., 1855 Luxembourg (LU)
(72) Erfinder: STEMMER, Jürgen, 42897 Remscheid (DE); GERDT, Dmitrij, 50670 Köln (DE)
(74) Vertreter: Loock, Jan Pieter
(86) Internationale Anmeldenummer: PCT/EP2014/063694
(87) Internationale Veröffentlichungsnummer: WO 2014/207201

(56) Entgegenhaltungen:
- WO-A1-99/41101
- DE-A1- 10 338 306

## Beschreibung

### Stand der Technik

Die vorliegende Erfindung geht aus von einer Verstellvorrichtung zum Verstellen einer Kraft- fahrzeugkomponente (siehe z.B. WO 99/41101 A1, dem Oberbegriff entsprechend).

Solche Verstellvorrichtungen weisen jeweils eine Arretierungsvorrichtung auf, welche eine Sperrung der Verstellvorrichtung aufgrund eines Reibschlusses zwischen einem Bremsring und Bremselementen gewährleistet. Die Sperrung wird nur dann aufgehoben, wenn vom Benutzer eine Verstellbewegung eingeleitet wird. Beim Vorhandensein von Vibrationen besteht die Gefahr, dass trotz der Reibschlussverbindung eine ungewollte Verstellung der Kraftfahrzeugkomponente eintritt.

### Offenbarung der Erfindung

Es ist Aufgabe der vorliegenden Erfindung, eine Verstellvorrichtung mit einem festen Element, einem verstellbaren Element und einer ersten Arretierungsvorrichtung zur Verfügung zu stellen, wobei die Verstellvorrichtung zusätzlich ein Mittel aufweist, das ein Ablaufen des verstellbaren Elements gegenüber dem festen Element verhindert. Dabei soll das Mittel zur Lösung der Aufgabe derart geschaffen sein, dass ein Verstellen des verstellbaren Elements unmittelbar erfolgen kann, sobald der Nutzer die Verstellvorrichtung zum Verstellen des verstellbaren Elements betätigt.

Die Aufgabe wird gelöst durch die Merkmale des unabhängigen Anspruchs 1, und zwar u.a. eine Verstellvorrichtung mit einem festen Element, einem verstellbaren Element und einer ersten Arretierungsvorrichtung, wobei das verstellbare Element relativ zum festen Element um eine Zentralachse drehbar gelagert ist und das verstellbare Element relativ zum festen Element durch die erste Arretierungsvorrichtung arretierbar ist, wobei die Verstellvorrichtung eine zweite Arretierungsvorrichtung zur Ablaufsicherung aufweist, wobei die zweite Arretierungsvorrichtung eine Adapterplatte und ein Sperrelement umfasst, wobei das Sperrelement drehfest am festen Element angeordnet ist und die Adapterplatte drehbar um die Zentralachse angeordnet ist, wobei in einer Sperrsituation durch die Adapterplatte eine Ausrastbewegung des Sperrelements entlang einer parallel zur Zentralachse verlaufenden Achse formschlüssig verhindert wird und wobei die Adapterplatte und das verstellbare Element derart konfiguriert sind, dass beim Übergang von einer Sperrsituation in eine Nicht-Sperrsituation die Adapterplatte (durch eine Drehbewegung) dem Sperrelement den Weg für die Ausrastbewegung freigibt (d. h. Sperrelement und Adapterplatte können nicht mehr formschlüssig in eine parallel zur Zentralachse verlaufende Richtung zusammenwirken) und das verstellbare Element derart antreibbar ist, dass die Drehung des verstellbaren Elements die Ausrastbewegung bewirkt. Insbesondere ist es vorgesehen, dass das verstellbare Element relativ zum festen Element drehbar ist, bevor die Ausrastbewegung für das Sperrfederelement freigegeben wird.

Die erfindungsgemäße Verstellvorrichtung hat gegenüber dem Stand der Technik den Vorteil, dass das verstellbare Element bereits beim Übergang von der Sperrsituation in die Nicht-Sperrsituation verstellbar ist, d. h. es muss nicht erst eine mit einem Leerlauf oder Vorlauf verbundene Bewegung erfolgen, die der Verstellbewegung des verstellbaren Elements zeitlich vorgelagert ist. In vorteilhafter Weise lässt sich daher das verstellbare Element unmittelbar betätigen. Ein weiterer Vorteil ist, dass unter Umständen auf zusätzliche mechanische Verbindungen verzichtet werden kann, die ein zeitlich verzögertes Einsetzen der Verstellbewegung des verstellbaren Elements realisieren. Neben den Mehrkosten, die durch die zusätzlichen mechanischen Verbindungen (z. B. Zapfen oder ähnlich Strukturen) entstehen, besteht bei solchen mechanischen Verbindungen auch immer die Gefahr eines Verkantens oder Abbrechens, wenn sie nach einem gewissen Leerweg das verstellbare Element mitführen sollen. Diese Gefahr besteht insbesondere dann, wenn die Verstellvorrichtung vielfach und über einen längeren Zeitraum betätigt wird.

Typischerweise ist die Verstellvorrichtung Teil einer Kraftfahrzeugkomponente und vorzugsweise handelt es sich bei der ersten Arretierungsvorrichtung um eine Reibbremse. Darüber ist die Adapterplatte üblicherweise mit einem Betätigungsmittel verbunden, wie z. B. einem Hebelarm oder Ähnlichem.

In einer weiteren bevorzugten Ausführungsform ist es vorgesehen, dass das verstellbare Element über die Adapterplatte antreibbar ist. Dadurch wird in vorteilhafter Weise die Drehbewegung der Adapterplatte mit der Drehbewegung des verstellbaren Teils synchronisiert. Insbesondere wird in dieser Ausführungsform dafür gesorgt, dass das verstellbare Element verstellbar ist, sobald die Adapterplatte betätigt wird.

Erfindungsgemäß ist es vorgesehen, dass die Adapterplatte einen Sperrbolzen und das Sperrelement einen Vorsprung umfasst, wobei in einer Sperrsituation Sperrbolzen und Vorsprung entlang einer parallel zur Zentralachse verlaufenden Richtung übereinander angeordnet sind und beim Übergang von der Sperrsituation in die Nicht-Sperrsituation entlang einer parallel zur Zentralachse verlaufenden Richtung zueinander versetzt angeordnet sind. Dadurch kann in vorteilhafter Weise eine Anordnung mit Sperrbolzen und Vorsprung realisiert werden, die verhindert, dass in der Sperrsituation dem Sperrelement, insbesondere dessen Vorsprung, der Weg für die Ausrastbewegung freigegeben wird. Insbesondere ist es vorgesehen, dass die Adapterplatte in der Sperrsituation direkt oder indirekt derart formschlüssig mit dem Sperrelement zusammenwirkt, dass keine Ausrastbewegung stattfinden kann bzw. die Ausrastbewegung unterdrückt wird. In vorteilhafter Weise können Vorsprung und Adapterplatte flexibel ausgestaltet werden und an andere strukturelle Vorgaben der Verstellvorrichtung angepasst werden.
In einer bevorzugten Ausführungsform ist es vorgesehen, dass die Adapterplatte einen Adapterplattensteg mit dem Sperrbolzen aufweist, wobei die Adapterplatte und der Adapterplattensteg derart konfiguriert sind, dass beim Betätigen der Adapterplatte der Adapterplattensteg zeitlich verzögert zur Adapterplatte bewegt wird. Dies kann beispielsweise durch eine Langloch-Zapfen-Konstruktion realisiert werden, wobei der Zapfen an der Adapterplatte angeordnet ist und das Langloch am Adapterplattensteg, wodurch die Adapterplatte den Adapterplattensteg erst nach einem Leerweg, d. h. zeitverzögert, mitnimmt. Als Resultat gibt auch der Sperrbolzen am Adapterplattensteg dem Sperrelement erst zeitverzögert den Weg für die Ausrastbewegung frei. Dadurch wird in vorteilhafter Weise eine Verstellvorrichtung realisiert, bei der das verstellbare Element drehbar ist, bevor der Weg für die Ausrastbewegung des Sperrelements freigegeben wird. Es ist auch vorstellbar, dass die Adapterplatte und der Adapterplattensteg zwei um die Zentralachse drehbar gelagerte Einzelteile sind, wobei die Adapterplatte und der Adapterplattensteg derart konfiguriert sind, dass die Adapterplatte den Adapterplattensteg nach einem Leerweg mitnimmt und dadurch der Sperrbolzen am Adapterplattensteg dem Sperrelement erst zeitverzögert den Weg für die Ausrastbewegung freigibt.
In einer weiteren Ausführungsform ist es vorgesehen, dass das verstellbare Element eine verzahnte Struktur aufweist, wobei die verzahnte Struktur in der Sperrsituation derart mit dem Sperrelement formschlüssig in eine senkrecht zur Zentralachse verlaufende Richtung zusammenwirkt, dass die Drehung des verstellbaren Elements um die Zentralachse eingeschränkt wird. Es ist auch vorgesehen, dass beim Übergang von der Sperrsituation in die Nicht-Sperrsituation die Drehung der verzahnten Struktur die Ausrastbewegung bewirkt bzw. veranlasst. Dadurch kann in vorteilhafter Weise bereits mit der Drehbewegung des verstellbaren Teils begonnen werden, auch wenn die Ausrastbewegung noch nicht abgeschlossen wurde. Insbesondere ist es vorgesehen, dass die Zähne eine Schrägfläche aufweisen, die dem Vorsprung beim Übergang von der Sperrsituation in die Nicht-Sperrsituation als Rampe dient, entlang der der Vorsprung bewegt wird, wenn sich die verzahnte Struktur dreht. Das heißt, es ist vorgesehen, dass die Ausrastbewegung bei der Drehung des verstellbaren Elements durch das Zusammenwirken von Rampe und verzahnter Struktur bewirkt wird. Mit anderen Worten: Über den Abtrieb der Rampe erfolgt eine Entriegelung, sofern die Ausrastbewegung nicht durch die Adapterplatte, insbesondere deren Sperrbolzen, verhindert wird.

In einer weiteren Ausführungsform ist es vorgesehen, dass die Adapterplatte eine Primärstellung in der Sperrsituation und der Nicht-Sperrsituation einnimmt und eine Sekundärstellung beim Übergang von der Sperrsituation in die Nicht-Sperrsituation einnimmt. Dadurch kann in vorteilhafter Weise über die Stellung der Adapterplatte bestimmt werden, wann ein Übergang von der Sperrsituation in die Nicht-Sperrsituation bzw. von der Nicht-Sperrsituation in die Sperrsituation erfolgt.

In einer weiteren Ausführungsform ist es vorgesehen, dass die Verstellvorrichtung eine Spiralfeder umfasst, wobei durch die Rückstellkraft der Spiralfeder die Adapterplatte von einer der Sekundärstellungen in die Primärstellung überführbar ist. Dadurch muss die Adapterplatte in vorteilhafter Weise nicht manuell in die Primärstellung zurückgeführt werden.

In einer weiteren Ausführungsform ist es vorgesehen, dass die Adapterplatte und das Sperrelement derart ausgebildet sind, dass das Sperrelement nach Abschluss der Ausrastbewegung daran gehindert wird, eine Einrastbewegung zu vollziehen. Dadurch wird in vorteilhafter Weise verhindert, dass das Sperrelement ungewollt wieder in die Position zurückkehrt, die es für die Sperrsituation einnimmt.

In einer weiteren Ausführungsform ist es vorgesehen, dass das Sperrelement ein Sperrfederelement umfasst, wobei das Sperrfederelement in der Sperrsituation entlang einer parallel zur Zentralachse verlaufenden Richtung formschlüssig mit der Adapterplatte, insbesondere dem Sperrbolzen der Adapterplatte, zusammenwirkt und in der Nicht-Sperrsituation derart kraftschlüssig mit der Adapterplatte zusammenwirkt, dass eine Einrastbewegung verhindert wird. Auf vorteilige Weise wird so ohne zusätzliche Mittel bzw. Vorrichtung verhindert, dass das Sperrelement ungewollt wieder in die Position zurückkehrt, die es für die Sperrsituation einnimmt. Es ist auch vorstellbar, dass die Sperrfeder nicht zwingend an der Einrastbewegung gehindert wird.

In einer weiteren Ausführungsform ist es vorgesehen, dass es sich bei dem Sperrfederelement um eine Blattfeder handelt. Blattfedern können in vorteilhafter Weise platzsparend in die Verstellvorrichtung am Sperrelement integriert werden. In einer alternativen Ausführungsform ist das Sperrfederelement eine Schenkelfeder, eine Zug- oder Druckfeder. Insbesondere ist es auch vorstellbar, dass das Sperrfederelement in eine Richtung senkrecht zur Zentralachse, vorzugsweise radial von der Zentralachse weg oder radial zur Zentralachse hin, bewegbar ist bzw. die Rückstellkraft in eine solche radiale Richtung wirkt. Dabei ist es auch denkbar, dass das Sperrfederelement im Wesentlichen in dem Bereich angeordnet ist, der sich zwischen Zentralachse und der verzahnten Struktur erstreckt.

Vorteilhafte Ausgestaltungen und Weiterbildungen der Erfindung sind den Unteransprüchen sowie der Beschreibung unter Bezugnahme auf die Zeichnungen entnehmbar.

Weitere Einzelheiten, Merkmale und Vorteile der Erfindung ergeben sich aus den Zeichnungen sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Figuren

**Figur 1** zeigt eine Ansicht einer Verstellvorrichtung 1 gemäß einer ersten beispielhaften Ausführungsform der vorliegenden Erfindung.
**Figur 2** zeigt eine erste schematische Querschnittsansicht entlang einer Ebene, die parallel zu einer Zentralachse und parallel zur Linie A - A aus Figur 1 verläuft.
**Figur 3** zeigt eine zweite schematische Querschnittsansicht aus einem Sperrbereich einer Verstellvorrichtung gemäß der beispielhaften ersten Ausführungsform der vorliegenden Erfindung in der Sperrsituation.
**Figur 4** zeigt eine dritte schematische Querschnittsansicht aus dem Sperrbereich einer Verstellvorrichtung gemäß der beispielhaften ersten Ausführungsform der vorliegenden Erfindung in der Sperrsituation.
**Figur 5** zeigt eine vierte schematische Querschnittsansicht aus dem Sperrbereich einer Verstellvorrichtung gemäß der beispielhaften ersten Ausführungsform der vorliegenden Erfindung während einer ersten Phase des Übergangs von der Sperrsituation in eine Nicht-Sperrsituation.
**Figur 6** zeigt eine fünfte schematische Querschnittsansicht aus dem Sperrbereich einer Verstellvorrichtung gemäß der beispielhaften ersten Ausführungsform der vorliegenden Erfindung während einer zweiten Phase des Übergangs von der Sperrsituation in eine Nicht-Sperrsituation.
**Figur 7** zeigt eine sechste schematische Querschnittsansicht aus dem Sperrbereich einer Verstellvorrichtung gemäß der beispielhaften ersten Ausführungsform der vorliegenden Erfindung während einer dritten Phase des Übergangs von der Sperrsituation in eine Nicht-Sperrsituation, wobei dem Sperrfederelement der Weg für die Ausrastbewegung frei gegeben wird.
**Figur 8** zeigt eine siebte schematische Querschnittsansicht aus dem Sperrbereich einer Verstellvorrichtung gemäß der beispielhaften ersten Ausführungsform der vorliegenden Erfindung nach Abschluss einer Ausrastbewegung.
**Figur 9** zeigt eine achte schematische Querschnittsansicht aus dem Sperrbereich einer Verstellvorrichtung gemäß der beispielhaften ersten Ausführungsform der vorliegenden Erfindung nach Abschluss der Ausrastbewegung, wobei die Ausrichtung der Adapterplatte einer unbetätigten Ausrichtungsstellung entspricht.
**Figur 10** zeigt eine neunte schematische Querschnittsansicht aus dem Sperrbereich einer Verstellvorrichtung gemäß der beispielhaften ersten Ausführungsform der vorliegenden Erfindung nach Abschluss der Ausrastbewegung, wobei die Adapterplatte einer unbetätigten Ausrichtungsstellung entspricht.
**Figur 11** zeigt eine Ansicht einer Verstellvorrichtung gemäß einer zweiten beispielhaften Ausführungsform der vorliegenden Erfindung.
**Figur 12** zeigt eine zehnte schematische Querschnittsansicht entlang einer Ebene, die parallel zu einer Zentralachse und parallel zur Linie B - B aus Figur 11 verläuft.
**Figur 13** zeigt eine Verstellvorrichtung gemäß der zweiten beispielhaften Ausführungsform der vorliegenden Erfindung in einer Explosionsdarstellung.
**Figur 14** zeigt eine Verstellvorrichtung gemäß der zweiten beispielhaften Ausführungsform mit einer Adapterplatte in einer ersten Ausrichtungsstellung.
**Figur 15** zeigt eine Verstellvorrichtung gemäß der zweiten beispielhaften Ausführungsform mit einer Adapterplatte in einer zweiten Ausrichtungsstellung.
**Figur 16** zeigt eine elfte schematische Querschnittsansicht aus dem Sperrbereich einer Verstellvorrichtung 1 gemäß der zweiten beispielhaften Ausführungsform mit einer Adapterplatte in einer zweiten Ausrichtungsstellung.
**Figur 17** zeigt eine Verstellvorrichtung gemäß der zweiten beispielhaften Ausführungsform mit einer Adapterplatte in einer dritten Ausrichtungsstellung.
**Figur 18** zeigt eine zwölfte schematische Querschnittsansicht aus dem Sperrbereich einer Verstellvorrichtung 1 gemäß der zweiten beispielhaften Ausführungsform mit einer Adapterplatte in einer dritten Ausrichtungsstellung.
**Figur 19** zeigt eine Verstellvorrichtung gemäß einer dritten Ausführungsform der vorliegenden Erfindung zusammen mit einer vergrößerten Darstellung des Sperrbereichs.
**Figur 20** zeigt eine Verstellvorrichtung gemäß der dritten Ausführungsform der vorliegenden Erfindung zusammen mit einem Sperrelement, einer gezahnten Struktur und einem Adapterplattensteg, die jeweils als einzelnes Bauteil dargestellt sind.
**Figur 21** zeigt eine Verstellvorrichtung gemäß der dritten Ausführungsform der vorliegenden Erfindung zusammen mit zwei vergrößerten Darstellungen des Sperrbereichs aus zwei Perspektiven, mit einer Adapterplatte in einer Stellung, die die unbetätigte Adapterplatte einnimmt.
**Figur 22** zeigt eine Verstellvorrichtung gemäß der dritten Ausführungsform der vorliegenden Erfindung zusammen mit einer vergrößerten Darstellung des Sperrbereichs, wobei sich die Adapterplatte in der ersten Ausrichtungsstellung befindet.
**Figur 23** zeigt eine Verstellvorrichtung gemäß der dritten Ausführungsform der vorliegenden Erfindung zusammen mit einer vergrößerten Darstellung des Sperrbereichs, wobei sich die Adapterplatte in der zweiten Ausrichtungsstellung befindet.
**Figur 24** zeigt eine Verstellvorrichtung gemäß der dritten Ausführungsform der vorliegenden Erfindung zusammen mit einer vergrößerten Darstellung des Sperrbereichs, wobei sich die Adapterplatte in der dritten Ausrichtungsstellung befindet.
**Figur 25** zeigt eine Verstellvorrichtung gemäß der dritten Ausführungsform nach Abschluss der Ausrastbewegung beim Rückkehren der Adapterplatte in eine Stellung, die die unbetätigte Adapterplatte einnimmt.
**Figur 26** zeigt eine Verstellvorrichtung gemäß der dritten Ausführungsform zusammen mit einer vergrößerten Darstellung des Sperrbereichs nach Abschluss der Ausrastbewegung und nach der Rückkehr der Adapterplatte in eine Stellung, die die unbetätigte Adapterplatte einnimmt.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

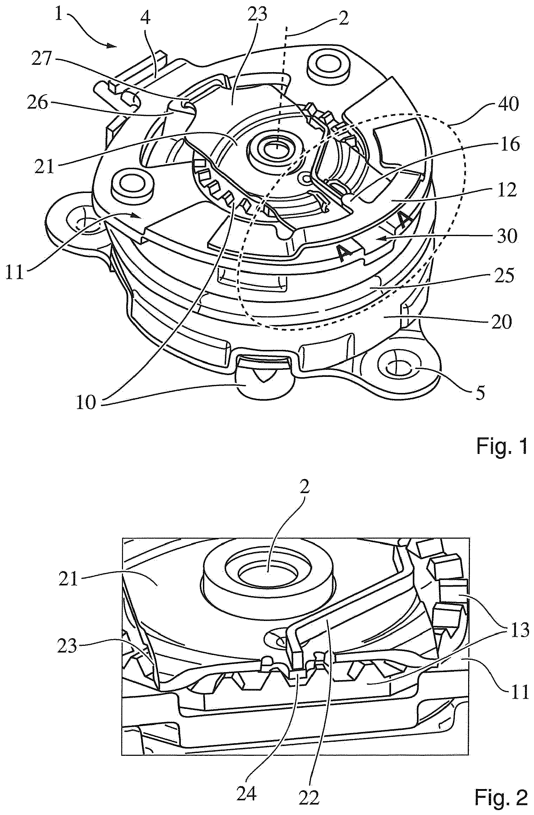

In **Figur 1** ist eine schematische Ansicht einer Verstellvorrichtung 1 gemäß einer ersten beispielhaften Ausführungsform der vorliegenden Erfindung für eine nicht illustrierte Kraftfahrzeugkomponente dargestellt. Dabei wird die Verstellvorrichtung 1 üblicherweise über Befestigungsvorrichtungen 5 an der Kraftfahrzeugkomponente befestigt. Die Verstellvorrichtung 1 weist typischerweise ein festes Element 20 und ein verstellbares Element 10 auf, wobei das verstellbare Element 10 um eine Zentralachse 2 relativ zum festen Element 20 drehbar gelagert ist. Dadurch lässt sich die relative Position zwischen dem festen und dem verstellbaren Element 20 und 10 verändern. Im Inneren der Verstellvorrichtung 1 weist die Verstellvorrichtung 1 eine erste Arretierungsvorrichtung (nicht dargestellt) auf, die dafür sorgt, dass das verstellbare Element 10 gegenüber dem festen Element 20 in einer gewünschten Position, insbesondere gewünschten Drehposition, arretiert wird. Üblicherweise bildet das feste Element 20 zumindest einen Teil des Gehäuses der Verstellvorrichtung 1. Bei der ersten Arretierungsvorrichtung handelt es sich vorzugsweise um eine Reibbremse. Zur Ablaufsicherung weist die Verstellvorrichtung 1 erfindungsgemäß zusätzlich zur ersten Arretierungsvorrichtung eine zweite Arretierungsvorrichtung auf. Die zweite Arretierungsvorrichtung umfasst dabei eine Adapterplatte 11 und ein Sperrelement 21. Es ist dabei vorgesehen, dass die zweite Arretierungsvorrichtung in einer Sperrsituation ein Ablaufen des verstellbaren Elements gegenüber dem festen Element 20 verhindert und in einer Nicht-Sperrsituation ein Verstellen des verstellbaren Elements 10 gegenüber dem festen Element 20 zulässt. Die Adapterplatte 11 ist um die Zentralachse 2 drehbar gelagert und nimmt in der Sperrsituation eine Primärstellung und in einer Nicht-Sperrsituation eine von der Primärstellung abweichende Sekundärstellung ein. Des Weiteren umfasst die Adapterplatte 11 eine über den Rand des festen Elements 20 bzw. des Gehäuses herausragende Lasche 4, wobei die Lasche 4 in Wirkverbindung mit einer das feste Element 20 umgebenden Spiralfeder 25 bringbar ist. Die Spiralfeder 25 lässt eine rücktreibende Kraft auf die Adapterplatte 11 wirken, wenn die Adapterplatte 11 aus ihrer Primärstellung herausgedreht wird. Es ist auch vorstellbar, dass eine andere Art von Feder oder ein anderes elastisch deformierbares Bauelement, wie z.B. ein Gummiband, eine rücktreibende Kraft auf die Adapterplatte ausübt und bewirkt dass (ohne entgegenwirkende äußere Krafteinwirkung) die Adapterplatte in die Position zurückkehrt, die die unbetätigte Adapterplatte 11 einnimmt. Darüber hinaus umfasst die Adapterplatte 11 in der in Figur 1 dargestellten Form einen Adapterplattensteg 12. Der Adapterplattensteg 12 ist als brückenähnliche Erhöhung zur generellen Erstreckung vom Grundkörper der Adapterplatte ausgebildet, wodurch zwischen Adapterplattensteg 12 und Grundkörper der Adapterplatte ein Freiraum 30 gebildet wird. Es ist auch vorstellbar, dass der Grundkörper der Adapterplatte unterhalb des Adapterplattenstegs eine Leerstelle aufweist bzw. der Grundkörper der Adapterplatte 11 derart gewölbt und perforiert ist, dass der Grundkörper der Adapterplatte 11 selbst bereits eine Art Adapterplattensteg formt. Weiterhin verfügt die Adapterplatte 11 über einen Sperrbolzen 16, der sich im Wesentlichen in einer senkrecht zur Zentralachse verlaufenden Ebene erstreckt und oberhalb des Freiraums 30 angeordnet ist. Vorzugsweise ist der Sperrbolzen 16 an dem Adapterplattensteg 12 angeordnet. Darüber hinaus ist es vorgesehen, dass das verstellbare Element 10 über die Adapterplatte 11 antreibbar ist. In der in Figur 1 dargestellten Ausführungsform weist das verstellbare Element 10 eine gezahnte Struktur 13 auf, wobei sich die einzelnen Zähne symmetrisch um die Zentralachse 2 anordnen. Die Adapterplatte 11 und das verstellbare Element 10 mit der gezahnten Struktur 13 bilden zusammen mit dem Sperrelement 21 die Hauptbestandteile der zweiten Arretierungsvorrichtung. Das Sperrelement 21 ist so am festen Element angeordnet, dass es im Wesentlichen drehfest um die Zentralachse 2 gelagert ist, d. h. im Wesentlichen nicht um die Zentralachse 2 drehbar ist. Es ist aber vorgesehen, dass das Sperrelement 21 in eine parallel zur Zentralachse 2 verlaufenden Richtung zumindest partiell verformbar und/oder verkippbar ist. In Figur 1 ist das Sperrelement 21 über eine weitere Lasche 27 mit einer Aussparung 26 im Gehäuse bzw. im festen Element 20 so verbunden, dass im Wesentlichen eine Drehung des Sperrelements 21 um die Zentralachse 2 unterbunden wird. Es ist aber auch denkbar, dass das Sperrelement 21 anders mit dem Gehäuse bzw. dem festen Element 20 drehfest verbunden ist. In der dargestellten Ausführungsform umfasst das Sperrelement 21 weiterhin eine Sperrelementgrundplatte, deren Haupterstreckungsebene sich in einer Sperrsituation im Wesentlichen senkrecht zur Zentralachse 2 erstreckt. Zusätzlich umfasst das Sperrelement ein Sperrfederelement 22, wobei das Sperrfederelement 22 ein erstes Federende und ein zweites Federende aufweist. Dabei ist das Sperrfederelement 22 am ersten Federende mit der Sperrelementgrundplatte fest verbunden und in eine senkrecht zur Zentralachse 2 verlaufende Richtung spannbar bzw. auslenkbar. Es ist auch vorstellbar, dass das Sperrfederelement 22 an der Adapterplatte 11 angeordnet ist. In der dargestellten Ausführungsform handelt es sich bei dem Sperrfederelement 22 um eine Blattfeder. Dabei erstreckt sich das Sperrfederelement 22 im ungespannten bzw. entspannten Fall über die gezahnte Struktur 13 bis unter den Freiraum 30 unterhalb des Adapterplattenstegs 12. Insbesondere ist das zweite Federende in der Sperrsituation unterhalb des Sperrbolzens 16 angeordnet. Des Weiteren weist die Sperrelementgrundfläche einen Vorsprung 24 auf, wobei dieser Vorsprung 24 in der Sperrsituation zwischen zwei Zähnen der gezahnten Struktur und einem Teil des Sperrfederelements angeordnet ist. Dadurch liegen ein Teil der verzahnten Struktur, ein Teil der Sperrfeder und der Vorsprung in einer Ebene, die parallel zur Zentralachse und parallel zur Linie A - A verläuft. Der Bereich innerhalb der gepunkteten Linie in Figur 1 wird im Folgenden als Sperrbereich bezeichnet.

In **Figur 2** ist eine schematische Ansicht entlang der Ebene, die parallel zur Zentralachse 2 und parallel zur Linie A - A verläuft aus Figur 1, dargestellt. Von oben nach unten sind in dieser Ebene ein Teil des Sperrfederelements 22, ein Teil des verstellbaren Elements 10 mit der verzahnten Struktur 13 und der Vorsprung 24 angeordnet. Es ist der Abbildung zu entnehmen, dass die Sperrelementgrundplatte eine Wölbung aufweist, unterhalb der sich die verzahnte Struktur anordnet. Insbesondere ist die Wölbung derart ausgestaltet, dass bei einer Drehung um die Zentralachse die verzahnte Struktur wie in einem Tunnel unterhalb der Wölbung bewegbar ist. Es ist vorgesehen, dass die Zähne der verzahnten Struktur 13 Schrägflächen aufweisen. Die Schrägflächen sind so geneigt, dass sie eine Rampe für den Vorsprung der Sperrelementgrundplatte bilden, wenn sich das verstellbare Element und damit die verzahnte Struktur 13 um die Zentralachse 2 drehen. Mit anderen Worten: In der dargestellten Figur 2 (ohne Adapterplatte 11) würde ein Verdrehen des verstellbaren Elements zu einer Verdrehung der verzahnten Struktur führen. Beim Verdrehen der verzahnten Struktur drücken die Schrägflächen der verzahnten Struktur so gegen den Vorsprung des Sperrelements 21, dass von der verkippbaren bzw. verformbaren Sperrelementgrundplatte eine Ausrastbewegung vollzogen wird. Die Ausrastbewegung erfolgt dabei in eine im Wesentlichen parallel zur Zentralachse 2 verlaufende Richtung.

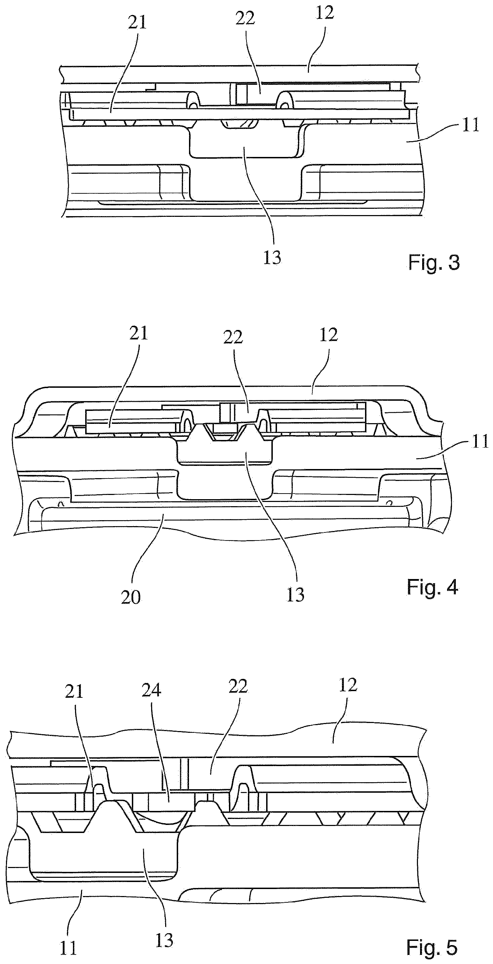

In **Figur 3** und in **Figur 4** sind zwei schematische Querschnittsansichten aus dem Sperrbereich einer Verstellvorrichtung gemäß der beispielhaften Ausführungsform der vorliegenden Erfindung dargestellt, wenn sich die zweite Arretierungsvorrichtung in der Sperrsituation befindet. Neben der verzahnten Struktur 13 des verstellbaren Elements 1, dem Sperrfederelement 22 und der Sperrelementgrundplatte ist auch die Adapterplatte und insbesondere der Adapterplattensteg illustriert, die zusammen den Freiraum 30 bilden. In der dargestellten Primärstellung der Adapterplatte 11 wirkt der Sperrbolzen mit dem Sperrfederelement und damit auch mit dem Vorsprung in eine parallel zur Zentralachse verlaufende Richtung formschlüssig zusammen. Dadurch ist der Vorsprung nicht in der Lage, mit Hilfe der Rampe bei einer Ablaufbewegung die Ausrastbewegung zu vollziehen. Stattdessen wirkt der Vorsprung in eine senkrecht zur Zentralachse 2 verlaufende Richtung formschlüssig mit einem der benachbarten Zähne zusammen und verhindert dadurch das Ablaufen des verstellbaren Elements gegenüber dem festen Element.

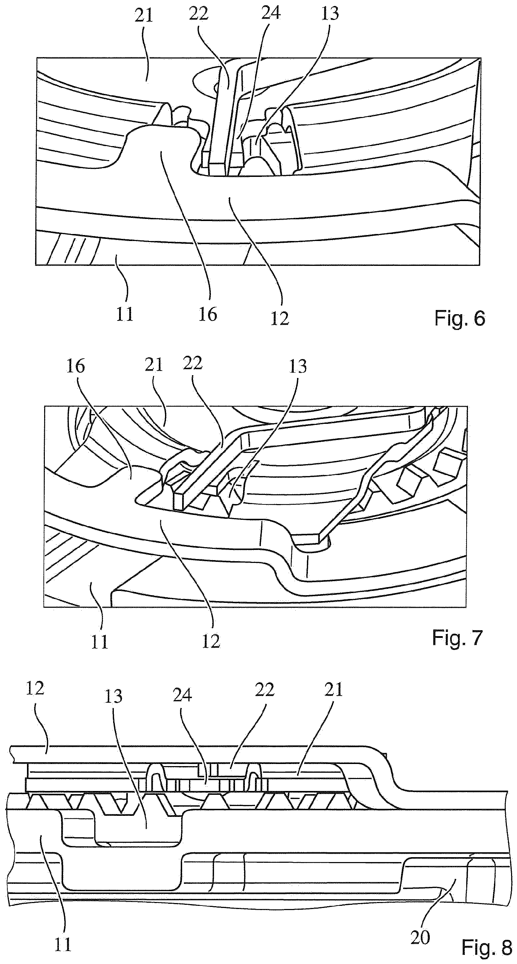

In den **Figuren 5****,** **6 und 7** sind drei schematische Querschnittsansichten aus dem Sperrbereich einer Verstellvorrichtung 1 gemäß der beispielhaften Ausführungsform der vorliegenden Erfindung beim Übergang von der Sperrsituation in eine Nicht-Sperrsituation dargestellt. Es ist vorgesehen, dass zum Übergang von der Sperrsituation in eine Nicht-Sperrsituation die Adapterplatte gedreht wird. Es ist dabei vorstellbar, dass die Betätigung der Adapterplatte dabei direkt über einen Griff oder Hebel oder indirekt über einen Seilzug oder Ähnliches erfolgt. Weiterhin ist es vorgesehen, dass die Adapterplatte bei ihrer Drehung ohne zusätzlichen Leerweg den verstellbaren Teil und damit auch die verzahnte Struktur mitbewegt. In Figur 5 ist zu erkennen, wie ein erster Zahn mit dem Vorsprung in Kontakt tritt. Gleichzeitig werden die Adapterplatte und damit auch der Adapterplattensteg und insbesondere der Sperrbolzen mitbewegt und zwar so, dass der Sperrbolzen und das Sperrfederelement in eine parallel zur Zentralachse verlaufende Richtung nicht länger formschlüssig zusammenwirken können. Mit anderen Worten: Die Adapterplatte gibt in einer Sekundärstellung dem Sperrfederelement 22 den Weg frei für eine Bewegung in eine parallel zur Zentralachse verlaufende Richtung, d. h. die Adapterplatte lässt eine Ausrastbewegung zu. Die Ausrastbewegung wird durch die Bewegung der verzahnten Struktur verursacht, indem die Rampe mit dem Vorsprung zusammenwirkt. Dadurch wird im Sinne der Ausrastbewegung der Vorsprung und damit auch das Sperrfederelement nach oben gedrückt. Während Figur 6 eine Momentaufnahme zu einem Zeitpunkt zeigt, zu dem der Sperrbolzen die Ausrastbewegung zulässt und die Ausrastbewegung ungefähr zur Hälfte vollzogen wurde, illustriert die Figur 7 eine Momentaufnahme zu einem späteren Zeitpunkt am zeitlichen Ende der Ausrastbewegung. Ist die Ausrastbewegung abgeschlossen, befindet sich die zweite Arretierungsvorrichtung in der Nicht-Sperrsituation und der Vorsprung der Sperrelementgrundplatte ist nicht in der Lage, mit den Zähnen der verzahnten Struktur des verstellbaren Teils formschlüssig zusammenzuwirken. Als Resultat wird das verstellbare Element 10 in der Nicht-Sperrsituation nicht daran gehindert, sich relativ zum festen Element 20 zu verstellen bzw. zu verdrehen.

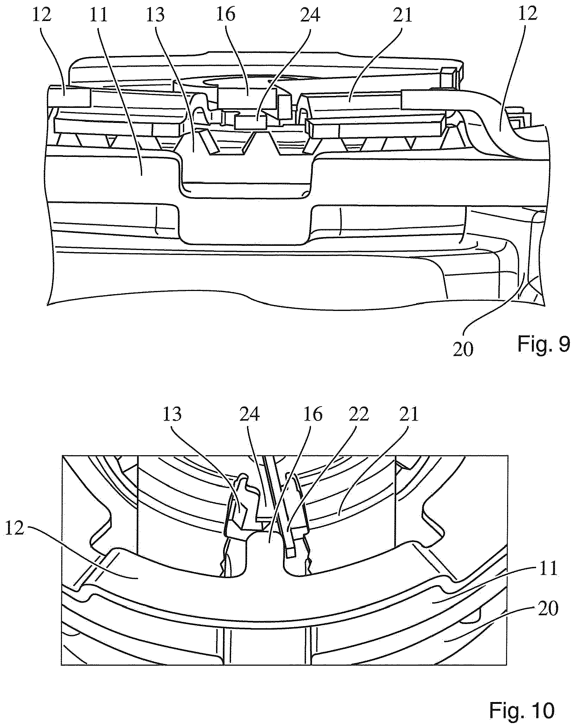

In den **Figuren 8****,** **9 und 10** sind drei schematische Querschnittsansichten aus dem Sperrbereich einer Verstellvorrichtung 1 gemäß der beispielhaften Ausführungsform der vorliegenden Erfindung nach Abschluss der Ausrastbewegung dargestellt. Die Figur 8 zeigt, dass in der Nicht-Sperrsituation der Vorsprung der Sperrelementgrundplatte über den Zähnen der verzahnten Struktur angeordnet ist. Durch das Anheben des Vorsprungs und des Sperrfederelements liegen nun der Sperrbolzen und das Sperrfederelement in einer Ebene. Von der Spiralfeder angetrieben, kehrt die Adapterplatte zurück in die Lage der Primärstellung. Dadurch drückt der Sperrbolzen die Sperrfeder zur Seite. Da der Sperrbolzen über die Adapterplatte durch die Spiralfeder vorgespannt ist, hält der zurückgekehrte Sperrbolzen das Sperrfederelement in einer gemeinsamen Ebene fest. Durch das Festhalten bleibt auch der Vorsprung der Sperrelementgrundplatte oberhalb der Zähne der verzahnten Struktur. In vorteilhafter Weise kann dadurch das verstellbare Element mit seiner verzahnten Struktur weitergedreht werden, ohne dass der Vorsprung bei der Drehung der verzahnten Struktur immer wieder zwischen die Zähne rutscht und dadurch die Drehbewegung des verstellbaren Teils zumindest erschwert, wenn nicht sogar blockiert.

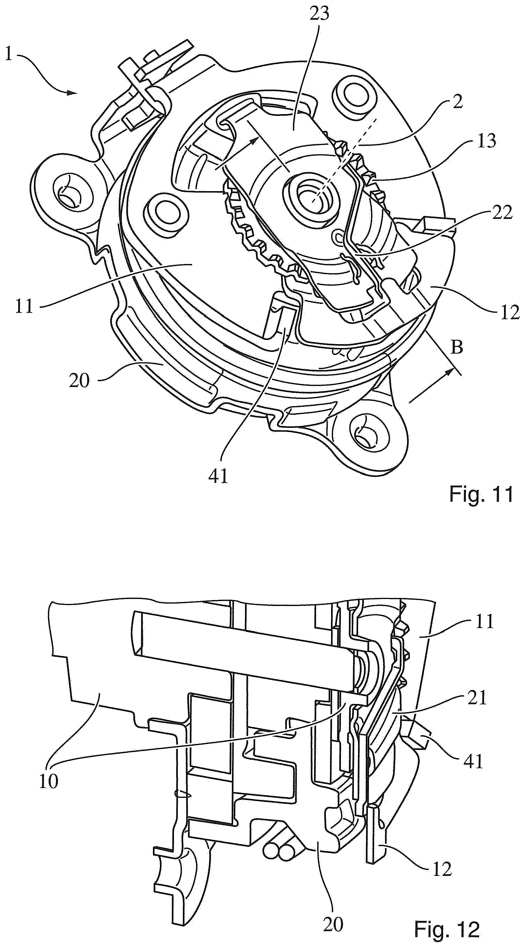

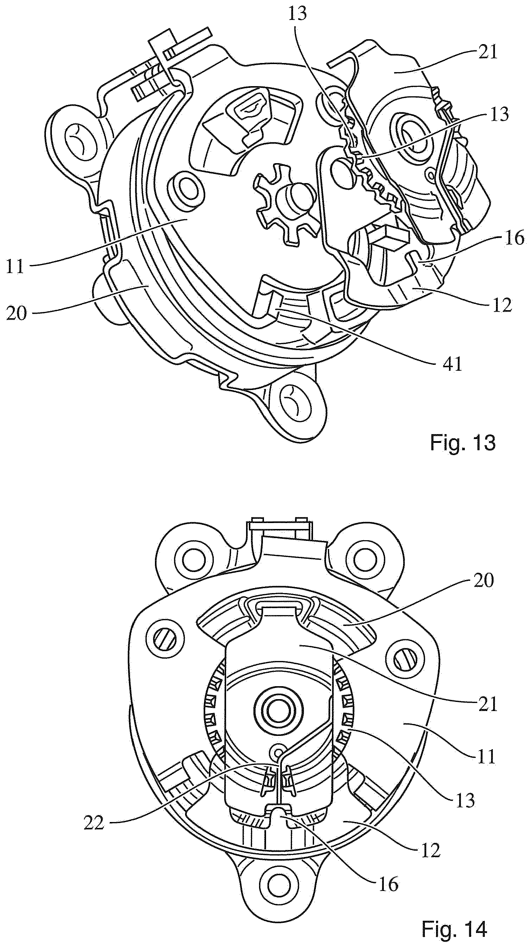

In den **Figuren 11, 12** **und** **13** sind schematische Ansichten einer Verstellvorrichtung gemäß einer zweiten beispielhaften Ausführungsform der vorliegenden Erfindung für eine nicht illustrierte Kraftfahrzeugkomponente dargestellt, wobei Figur 11 eine Draufsicht auf die Verstellvorrichtung 1, Figur 12 eine zehnte schematische Querschnittsansicht entlang einer Ebene der Verstellvorrichtung 1, die parallel zur Zentralachse 2 und parallel zur Linie B - B aus Figur 11 verläuft, und Figur 13 die Verstellvorrichtung in einer Explosionsdarstellung zeigt. In der zweiten beispielhaften Ausführungsform ist es vorgesehen, dass die Adapterplatte 11 und der Adapterplattensteg 12 zwei um die Zentralachse 2 drehbar gelagerte, separate Bauteile sind. Insbesondere ist es in dieser zweiten beispielhaften Ausführungsform vorgesehen, dass die Adapterplatte 11 einen Mitnehmer 41 aufweist, wobei der Mitnehmer 41 durch einen Vorsprung an der Adapterplatte 11 in einer im Wesentlichen parallel zur Zentralachse 2 verlaufenden Richtung gebildet wird. Bei einer Drehung der Adapterplatte11 um einen durch die Ausgestaltung von Adapterplatte 11 und Adapterplattensteg 12 vorgegebenen Drehwinkel nimmt der Mitnehmer den Adapterplattensteg 12 mit. Die Figuren 12 und 13 zeigen, dass der Adapterplattensteg 12 in dieser zweiten beispielhaften Ausführungsform im Wesentlichen zwischen Sperrelement bzw. verstellbarem Element 10 und Adapterplatte angeordnet ist, wobei die Adapterplatte 11 nur durch eine Drehbewegung mit dem Adapterplattensteg formschlüssig zusammenwirken und dadurch gedreht werden kann. Der Adapterplattensteg weist weiterhin einen Sperrbolzen 16 auf und ist derart ausgestaltet, dass der Speerbolzen 16 über dem Sperrfederelement 22 in einer Richtung parallel zur Zentralachse 2 angeordnet ist. Weiterhin ist es vorgesehen, dass das verstellbare Element 10 eine gezahnte Struktur 13 aufweist und ebenfalls drehbar um die Zentralachse 2 gelagert ist. Vorzugsweise wird die gezahnte Struktur 13 über die Drehbewegung der ersten Arretierungsvorrichtung, wie z.B. einer Reibbremse, mitgedreht. Insbesondere ist es vorgesehen, dass durch die Drehbewegung der Adapterplatte 11 das Verdrehen der gezahnten Struktur des verstellbaren Elements 13 bewirkt wird.

In **Figur 14** ist die Verstellvorrichtung gemäß der zweiten beispielhaften Ausführungsform mit der Adapterplatte in einer ersten Ausrichtungsstellung dargestellt. Diese erste Ausrichtungsstellung nimmt die Adapterplatte 11 beispielsweise ein, wenn die Verstellvorrichtung 1 nicht betätigt wird, d. h. in der Sperrsituation. In dieser Sperrsituation wird durch den Sperrbolzen die Ausrastbewegung des Sperrelements verhindert und die gezahnte Struktur des drehbaren Elements bewegt sich nicht. Es ist insbesondere vorstellbar, dass die Adapterplatte in ihrer ersten Ausrichtungsstellung bereits leicht gedreht ist, z. B. um 5 ° im Vergleich zu einer unbetätigten Adapterplattenausrichtung. Diese Stellung kann also unmittelbar nach Beginn der Betätigung der Verstellvorrichtung von der Adapterplatte 11 eingenommen werden. Unter der unbetätigten Adapterplattenausrichtung versteht sich die Adapterplattenausrichtung, die die Adapterplatte11 einnimmt, wenn die Verstellvorrichtung 1 nicht betätigt wird.

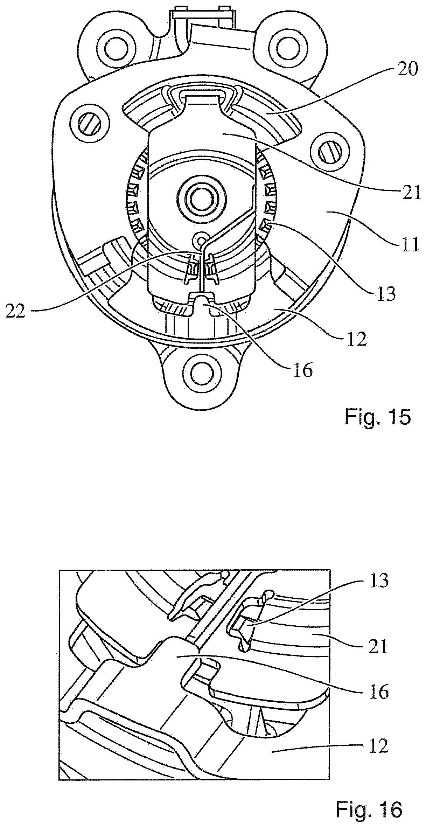

In den **Figuren 15 und 16** ist die Verstellvorrichtung 1 gemäß der zweiten Ausführungsform mit der Adapterplatte 11 in einer zweiten Ausrichtungsstellung gezeigt. In der zweiten Ausrichtungsstellung, die zeitlich nach der ersten Ausrichtungsstellung beim Betätigen der Verstellvorrichtung 1 eingenommen wird, wird die gezahnte Struktur des verstellbaren Elements 13 bereits mitgeführt, d. h. die verzahnte Struktur des verstellbaren Elements 13 dreht sich. Durch das Drehen der verzahnten Struktur des verstellbaren Elements 13 wirkt auf das Sperrfederelement 22 eine Kraft in Richtung der Ausrastbewegung. Die Ausrastbewegung des Sperrelements 21 wird jedoch durch den Sperrbolzen 16 des unbewegten Adapterplattenstegs 12 verhindert. Mit anderen Worten: Auch wenn sich das verstellbare Element 10 bereits bewegt, befindet sich die Verstellvorrichtung 1 noch nicht in der Nicht-Sperrsituation. Das Blockieren durch den Sperrbolzen 16 wird vergrößert in Figur 15 dargestellt. Es ist insbesondere vorstellbar, dass die Adapterplatte 11 in ihrer zweiten Ausrichtungsstellung um 7 ° im Vergleich zur unbetätigten Adapterplattenausrichtung gedreht ist.

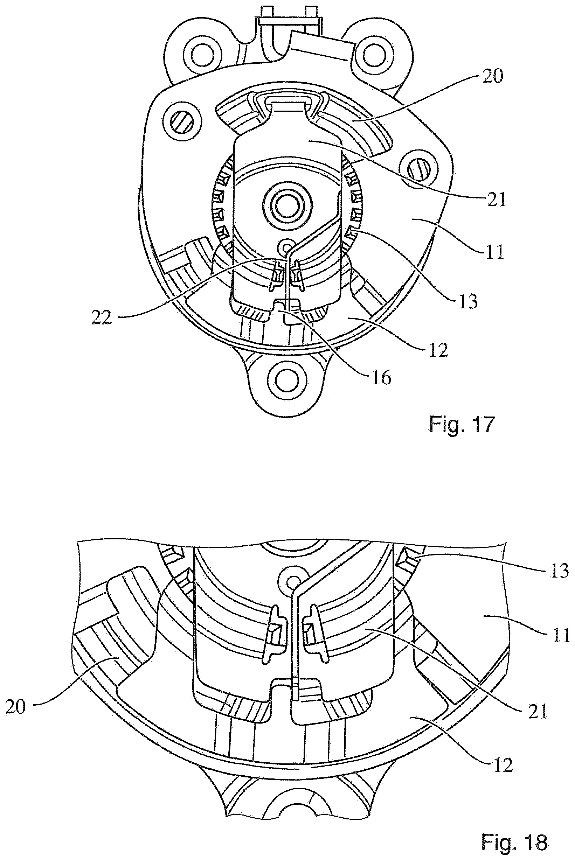

In den **Figuren 17 und 18** ist die Verstellvorrichtung 1 gemäß der zweiten Ausführungsform mit der Adapterplatte 11 in einer dritten Ausrichtungsstellung gezeigt. In der dritten Ausrichtungsstellung, die zeitlich nach der zweiten Ausrichtungsstellung beim Betätigen der Verstellvorrichtung 1 eingenommen wird, wirkt die Adapterplatte 11 mit dem Adapterplattensteg 12 derart formschlüssig zusammen, dass der Sperrbolzen 16 verschoben wird und dem Sperrelement 21 der Weg für die Ausrastbewegung freigegeben wird. Da die bereits zeitlich vorher begonnene Drehbewegung des verstellbaren Teils 10, insbesondere der verzahnten Struktur des verstellbaren Elements 13, auch beim Einnehmen der dritten Ausrichtungsstellung der Adapterplatte 11 fortgesetzt wird, kann das Sperrelement 21 die Ausrastbewegung ausführen, wenn die dritte Ausrichtungsstellung der Adapterplatte 11 eingenommen wird. Dies verdeutlicht Figur 18 in einer vergrößerten Darstellung des Sperrbereichs der Verstellvorrichtung 1 gemäß der zweiten beispielhaften Ausführungsform der vorliegenden Erfindung. Es ist insbesondere vorstellbar, dass die Adapterplatte 11 in ihrer dritten Ausrichtungsstellung um 10 ° im Vergleich zur unbetätigten Adapterplattenausrichtung gedreht ist.

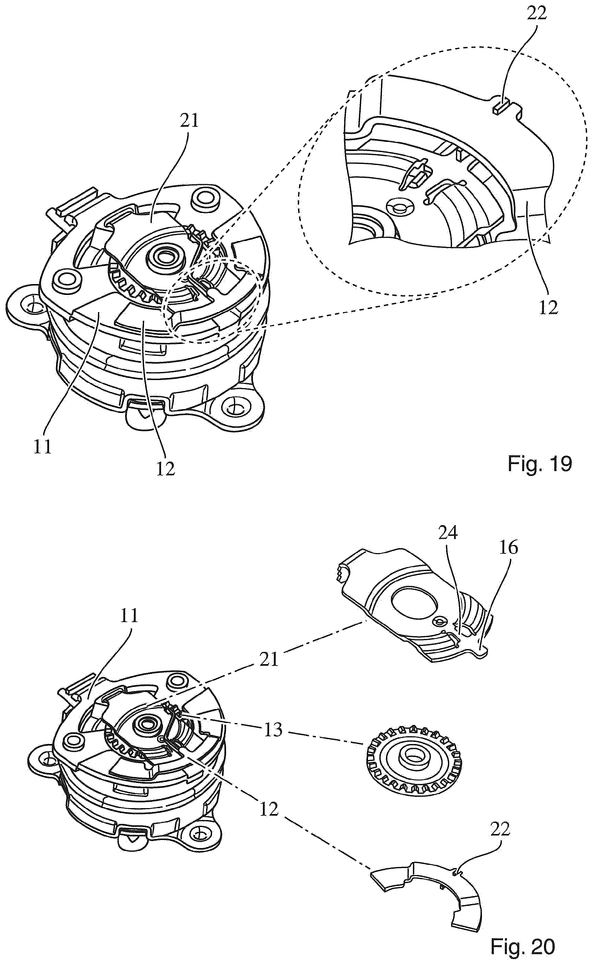

In **Figur 19** ist eine Verstellvorrichtung 1 gemäß einer dritten Ausführungsform dargestellt. In dieser Ausführungsform ist das Sperrfederelement 22 am Adapterplattensteg 12 und der Sperrbolzen 16 am Sperrelement 21 angeordnet. Dabei ist es vorgesehen, dass der Adapterplattensteg 12 drehfest an der Adapterplatte 11 angeordnet ist. Im gepunkteten Kreis ist vergrößert der Sperrbereich dargestellt.

In **Figur 20** ist die Verstellvorrichtung 1 gemäß der dritten Ausführungsform dargestellt zusammen mit den entsprechenden Ausgestaltungen des Adapterplattenstegs 12, der verzahnten Struktur 13 und des Sperrelements 21. Das entsprechende Sperrelement 21 weist einen Sperrbolzen 16 und einen Vorsprung 24 auf. Darüber hinaus ist das Sperrelement 21 derart ausgestaltet, dass in der montierten Verstellvorrichtung 1 der Vorsprung 24 zwischen zwei Zähnen der verzahnten Struktur 13 angeordnet werden kann. Außerdem ist es für die dargestellte Ausführungsform vorgesehen, dass der Sperrbolzen zumindest teilweise unterhalb des Adapterplattenstegs 12 verläuft. Der Adapterplattensteg 12 umfasst in dieser Ausführungsform das Sperrfederelement 22, wobei das Sperrfederelement 22 im Wesentlichen unterhalb des Adapterplattenstegs 12 verläuft. Es ist aber auch denkbar, dass das Sperrfederelement 22 am Adapterplattensteg 12 fest angeordnet ist und zum Teil nicht vom Adapterplattensteg 12 in eine parallel zur Zentralachse 2 verlaufende Richtung überdeckt ist. Vorzugsweise ist das Sperrfederelement 22 stoffschlüssig, reibschlüssig und/oder formschlüssig am Adapterplattensteg 12 angeordnet. In der dargestellten Ausführungsform ist das Sperrfederelement 22 in eine senkrecht zur Zentralachse 2 verlaufende Richtung elastisch deformierbar.

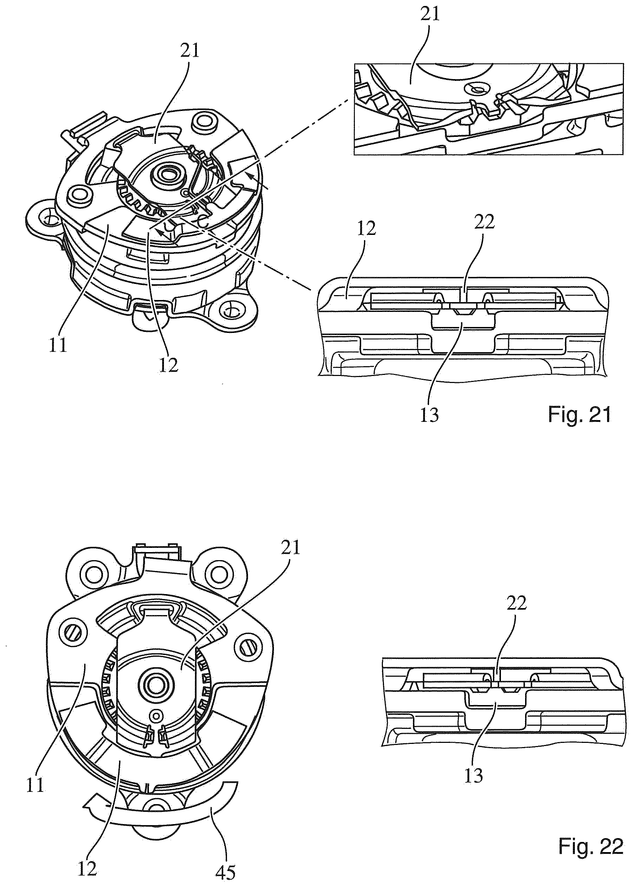

In Figur 21 ist die Verstellvorrichtung 1 gemäß der dritten Ausführungsform zusammen mit vergrößernden Darstellungen des Sperrbereichs, insbesondere entlang der Linie C-C, illustriert, wenn die Adapterplatte 11 nicht betätigt wird und die Sperrstellung der zweiten Arretierungsvorrichtung eingenommen wird. In der unbetätigten Adapterplattenstellung ist in dieser Ausführungsform das Sperrfederelement 22 in einer parallel zur Zentralachse 2 verlaufenden Richtung oberhalb des Sperrbolzens 16 des Sperrelements 21 angeordnet, wenn die Sperrstellung eingenommen wird. Es ist dabei vorgesehen, dass in der Sperrstellung das Sperrfederelement 22 und der Sperrbolzen 16 formschlüssig in eine Richtung parallel zur Zentralachse 2 zusammenwirken. Die Anordnung von Sperrfederelement 22 und Sperrbolzen 16 ist im Detail in der unteren der beiden vergrößerten Darstellungen des Sperrbereichs gezeigt. An welcher Stelle der Verstellvorrichtung 1 in einer Ebene senkrecht zur Zentralachse 2 der Formschluss erfolgt, ist dabei unerheblich. Beispielsweise kann in der Sperrstellung der Sperrbolzen 16 mit dem Sperrfederelement 22 an einer Formschluss-Stelle formschlüssig zusammenwirken, wobei die Formschluss-Stelle in einer parallel zur Zentralachse 2 verlaufenden Richtung unterhalb des Adapterplattenstegs 12 angeordnet ist. Es ist aber auch vorstellbar, dass der Sperrbolzen16 und das Sperrfederelement 22 derart ausgestaltet sind, dass die Formschluss-Stelle zwischen Adapterplattensteg 12 und Zentralachse 2 angeordnet ist. Da Sperrbolzen 16 und Vorsprung 24 des Sperrelements 21 in der dritten Ausführungsform starr miteinander verbunden sind, wird durch das formschlüssige Zusammenwirken von Sperrbolzen 16 und Sperrfederelement 22 verhindert, dass das Sperrfederelement 22 verschwenkbar bzw. teilweise in eine parallel zur Zentralachse verlaufende Richtung anhebbar ist. Als Resultat bleibt in der Sperrstellung der Vorsprung 24 des Sperrelements 21 zwischen zwei Zähnen der verzahnten Struktur 13 derart angeordnet, dass die verzahnte Struktur 13 und der Vorsprung 24 formschlüssig in eine senkrecht zur Zentralachse 2 verlaufende Richtung zusammenwirken und dadurch das Ablaufen des verstellbaren Elements 10 gegenüber dem festen Element 20 verhindern. Die Anordnung von Vorsprung 24 und verzahnter Struktur 13 ist im Detail in der oberen der beiden vergrößerten Darstellungen des Sperrbereichs gezeigt.

In **Figur 22** ist die Verstellvorrichtung 1 gemäß der dritten beispielhaften Ausführungsform mit der Adapterplatte 11 in der ersten Ausrichtungsstellung dargestellt. Diese erste Ausrichtungsstellung nimmt die Adapterplatte 11 beispielsweise zu Beginn ihrer Betätigung ein. In dieser Situation befindet sich die Verstellvorrichtung 1 im Totgang, d. h. das verstellbare Element 10 bewegt sich nicht gegenüber dem festen Element 20 trotz der Drehbewegung der Adapterplatte 11. Es ist insbesondere vorstellbar, dass die Adapterplatte 11 in ihrer ersten Ausrichtungsstellung um 5 ° in eine Drehrichtung 45 im Vergleich zur unbetätigten Adapterplattenausrichtung gedreht ist.

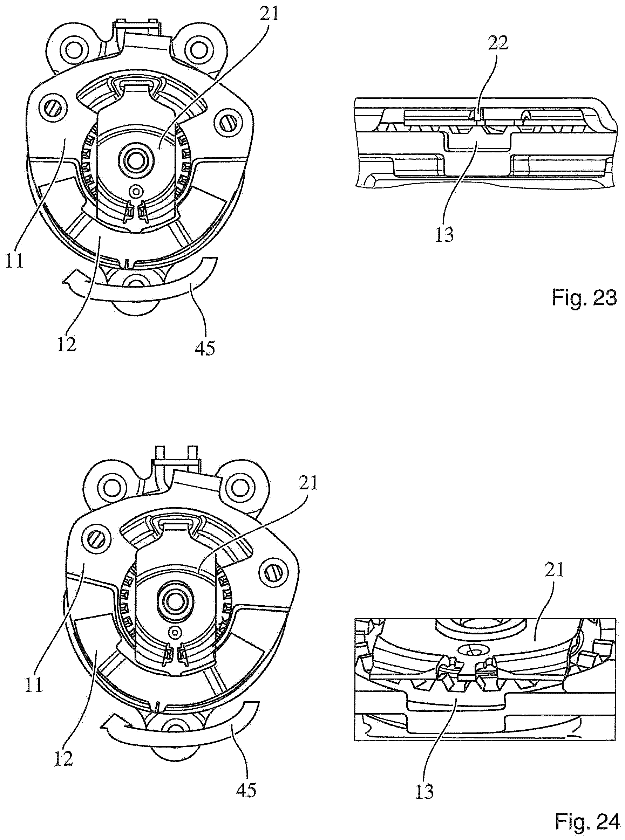

In **Figur 23** ist die Verstellvorrichtung 1 gemäß der dritten beispielhaften Ausführungsform mit der Adapterplatte 11 in der zweiten Ausrichtungsstellung dargestellt. In der zweiten Ausrichtungsstellung, die zeitlich nach der ersten Ausrichtungsstellung beim Betätigen der Verstellvorrichtung 1 eingenommen wird, beginnt sich der verstellbare Teil 10 zu drehen, insbesondere die verzahnte Struktur 13. Die Ausrastbewegung des Sperrelements 21 wird jedoch durch das formschlüssige Zusammenwirken vom Sperrblock 16 am Sperrelement 21 mit dem Sperrfederelement 22 am Adapterplattensteg12 verhindert, wie es im Detail in der vergrößerten Darstellung illustriert ist. Mit anderen Worten: Auch wenn sich das verstellbare Element 10 bereits bewegt, befindet sich die Verstellvorrichtung 1 noch nicht in der Nicht-Sperrsituation. Es ist insbesondere vorstellbar, dass die Adapterplatte 11 in ihrer zweiten Ausrichtungsstellung um 7 ° im Vergleich zur unbetätigten Adapterplattenausrichtung gedreht ist.

In **Figur 24** ist die Verstellvorrichtung 1 gemäß der dritten Ausführungsform mit der Adapterplatte 11 in einer dritten Ausrichtungsstellung gezeigt. In der dritten Ausrichtungsstellung, die zeitlich nach der zweiten Ausrichtungsstellung beim Betätigen der Verstellvorrichtung 1 eingenommen wird, wird dem Sperrbolzen 16 am Sperrelement 21 der Weg zur Ausrastbewegung freigegeben und die Drehbewegung des verstellbaren Elements 10 bewirkt die Ausrastbewegung. Dies verdeutlicht Figur 24 im Detail anhand einer vergrößerten Darstellung des Sperrbereichs der Verstellvorrichtung 1 gemäß der dritten Ausführungsform der vorliegenden Erfindung. Es ist insbesondere vorstellbar, dass die Adapterplatte 11 in ihrer dritten Ausrichtungsstellung um 10° im Vergleich zur unbetätigten Adapterplattenausrichtung gedreht ist.

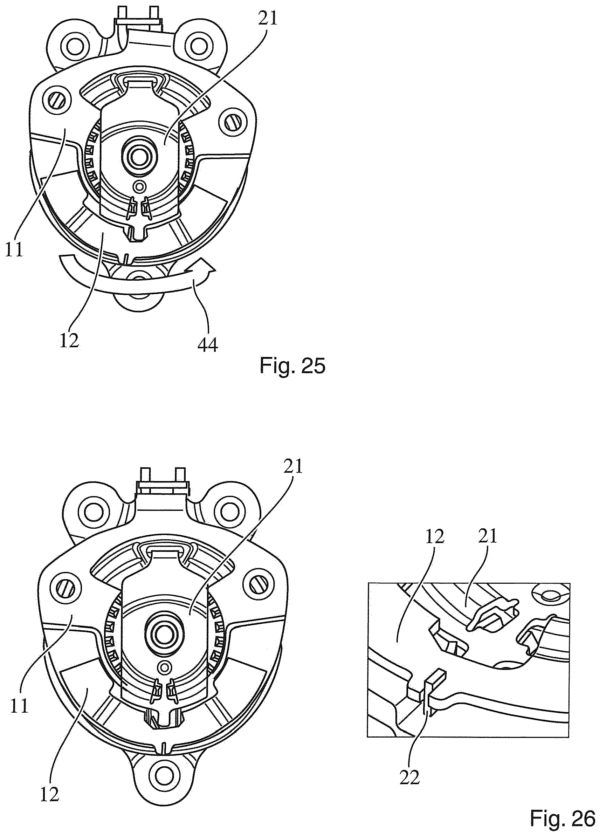

In **Figur 25** ist die Verstellvorrichtung 1 gemäß der dritten Ausführungsform nach Abschluss der Ausrastbewegung in einer Nicht-Sperrstellung dargestellt, wenn die Adapterplatte 11 einer Rückkehrbewegung 44 folgt. Eine solche Rückkehrbewegung 44 kann beispielsweise durch die Spiralfeder 25 bewirkt werden, deren rücktreibende Kraft die Adapterplatte 11 in eine Stellung überführt, die die Adapterplatte einnimmt, wenn die Verstellvorrichtung 1 nicht betätigt wird. In der dargestellten Situation der Verstellvorrichtung 1 befindet sich die Verstellvorrichtung 1 in einer Nicht-Sperrstellung. Insbesondere ist unter diesen Voraussetzungen vorgesehen, dass das Sperrfederelement 22 und der Sperrbolzen 16 zumindest teilweise in einer gemeinsamen, senkrecht zur Zentralachse 2 verlaufenden Ebene angeordnet sind.

In **Figur 26** ist die die Verstellvorrichtung 1 gemäß der dritten Ausführungsform nach Abschluss der Ausrastbewegung in einer Nicht-Sperrstellung dargestellt, wenn zusätzlich die Rückkehrbewegung 44 abgeschlossen ist und die Adapterplatte 11 eine Stellung einnimmt, die auch die unbetätigte Adapterplatte einnimmt. Befindet sich die Adapterplatte 11 bei der Nicht-Sperrstellung in der Position der unbetätigten Adapterplatte, wirkt das Sperrfederelement 22 mit dem Sperrbolzen 16 derart reibschlüssig zusammen, dass das Sperrelement 21 an einer Einrastbewegung gehindert wird. Wie es in der vergrößerten Darstellung illustriert ist, ist es dabei vorstellbar, dass das Sperrfederelement 22 in eine Richtung senkrecht zur Zentralachse 2 elastisch deformiert wird und die rücktreibende Kraft des Sperrfederelements 22 das reibschlüssige Zusammenwirken von Sperrbolzen 16 und Sperrfederelement 22 unterstützt.

### Bezugszeichenliste

- 1: Verstellvorrichtung
- 2: Zentralachse
- 4: Lasche
- 5: Befestigungsvorrichtung
- 10: verstellbares Element
- 11: Adapterplatte
- 12: Adapterplattensteg
- 13: gezahnte Struktur des verstellbaren Elements
- 16: Sperrbolzen
- 20: festes Element
- 21: Sperrelement
- 22: Sperrfederelement
- 23: Sperrelementgrundplatte
- 24: Vorsprung
- 25: Spiralfeder
- 26: Aussparung
- 27: weitere Lasche
- 30: Freiraum
- 40: Sperrbereich
- 41: Mitnehmer
- 44: Rückkehrbewegung
- 45: Drehrichtung

## Patentansprüche

1. Verstellvorrichtung (1) mit einem festen Element (20), einem verstellbaren Element (10) und einer ersten Arretierungsvorrichtung, wobei das verstellbare Element (10) relativ zum festen Element (20) um eine Zentralachse (2) drehbar gelagert ist und das verstellbare Element (10) relativ zum festen Element (20) durch die erste Arretierungsvorrichtung arretierbar ist, wobei die Verstellvorrichtung (1) eine zweite Arretierungsvorrichtung zur Ablaufsicherung aufweist, wobei die zweite Arretierungsvorrichtung eine Adapterplatte (11) und ein Sperrelement (21) umfasst, wobei das Sperrelement (21) drehfest am festen Element (20) angeordnet ist und die Adapterplatte (11) drehbar um die Zentralachse (2) angeordnet ist, wobei in einer Sperrsituation durch die Adapterplatte (11) eine Ausrastbewegung des drehfesten Sperrelements (11) entlang einer parallel zur Zentralachse (2) verlaufenden Achse verhindert wird, wobei das verstellbare Element (10) über die Adapterplatte (11) antreibbar ist und wobei die Adapterplatte (11) und das verstellbare Element (10) derart konfiguriert sind, dass beim Übergang von einer Sperrsituation in eine Nicht-Sperrsituation die Adapterplatte (11) dem Sperrelement (21) den Weg für die Ausrastbewegung freigibt und das verstellbare Element (10) derart antreibbar ist, dass die Drehung des verstellbaren Elements (10) die Ausrastbewegung bewirkt, wobei das verstellbare Element (10) relativ zum festen Element (20) drehbar ist, bevor die Ausrastbewegung für das Sperrelement (21) freigegeben ist, wobei die Adapterplatte (11) einen Sperrbolzen (16) und das Sperrelement (21) einen Vorsprung (24) umfasst, **dadurch gekennzeichnet, dass** in einer Sperrsituation Sperrbolzen (16) und Vorsprung (24) entlang einer parallel zur Zentralachse (2) verlaufenden Richtung übereinander angeordnet sind und beim Übergang von der Sperrsituation in die Nicht-Sperrsituation entlang einer parallel zur Zentralachse (2) verlaufenden Richtung zueinander versetzt angeordnet sind.

2. Verstellvorrichtung (1) gemäß Anspruch 1, wobei die Adapterplatte (11) einen Adapterplattensteg (12) mit dem Vorsprung (24) aufweist, wobei die Adapterplatte (11) und der Adapterplattensteg (12) derart konfiguriert sind, dass beim Betätigen der Adapterplatte (11) der Adapterplattensteg (12) verzögert zur Adapterplatte (11) bewegt wird.

3. Verstellvorrichtung (1) gemäß einem der vorhergehenden Ansprüche, wobei das verstellbare Element (10) eine verzahnte Struktur (13) aufweist, wobei die verzahnte Struktur (13) in der Sperrsituation derart mit dem Sperrelement (21) in eine Richtung senkrecht zur Zentralachse (21) formschlüssig zusammenwirkt, dass die Drehung des verstellbaren Elements (10) um die Zentralachse (2) eingeschränkt wird, und wobei beim Übergang von der Sperrsituation in die Nicht-Sperrsituation die Drehung der verzahnten Struktur (13) die Ausrastbewegung bewirkt.

4. Verstellvorrichtung (1) gemäß einem der vorhergehenden Ansprüche, wobei die Adapterplatte (11) eine Primärstellung in der Sperrsituation und der Nicht-Sperrsituation einnimmt und eine Sekundärstellung beim Übergang von der Sperrsituation in die Nicht-Sperrsituation.

5. Verstellvorrichtung (1) gemäß einem der vorhergehenden Ansprüche, wobei die Verstellvorrichtung (1) eine Spiralfeder (25) umfasst, wobei durch die Rückstellkraft der Spiralfeder die Adapterplatte (11) von einer der Sekundärstellungen in die Primärstellung überführbar ist.

6. Verstellvorrichtung (1) gemäß einem der vorhergehenden Ansprüche, wobei die Adapterplatte (11) und das Sperrelement (21) derart ausgebildet sind, dass das Sperrelement (21) nach Abschluss der Ausrastbewegung daran gehindert wird, eine Einrastbewegung zu vollziehen.

7. Verstellvorrichtung (1) gemäß einem der vorhergehenden Ansprüche, wobei das Sperrelement (21) ein Sperrfederelement (22) umfasst, wobei das Sperrfederelement (22) in der Sperrsituation entlang einer parallel zur Zentralachse (2) verlaufenden Richtung formschlüssig mit der Adapterplatte (11), insbesondere dem Sperrbolzen (16) der Adapterplatte (11), zusammenwirkt und in der Nicht-Sperrsituation bei Einnahme der Primärstellung der Adapterplatte (11) derart kraftschlüssig mit der Adapterplatte (11) zusammenwirkt, dass eine Einrastbewegung verhindert wird.

8. Verstellvorrichtung (1) gemäß Anspruch 7, wobei die Adapterplatte (11) das Sperrfederelement (22) umfasst, wobei das Sperrfederelement (22) in der Sperrsituation entlang einer parallel zur Zentralachse (2) verlaufenden Richtung formschlüssig mit dem Sperrelement (21) zusammenwirkt und in der Nicht-Sperrsituation bei Einnahme der Primärstellung der Adapterplatte (11) derart kraftschlüssig mit dem Sperrelement (21) zusammenwirkt, dass eine Einrastbewegung verhindert wird.

9. Verstellvorrichtung (1) gemäß Anspruch 7 oder 8, wobei es sich bei dem Sperrfederelement (22) um eine Blattfeder, eine Schenkelfeder und/oder eine Zug- oder Druckfeder handelt.

10. Verstellvorrichtung (1) gemäß einem der vorhergehenden Ansprüche, wobei ein Hebel oder anderes Betätigungsmittel derart mit der Adapterplatte (11) in einer Wirkverbindung steht, dass bei einer Betätigung des Hebels oder des Betätigungsmittels die Adapterplatte (11) gedreht wird.

## Claims

1. Adjuster device (1) having a fixed element (20), an adjustable element (10) and a first locking device, wherein the adjustable element (10) is mounted rotatably about a central axis (2) relative to the fixed element (20), and the adjustable element (10) is lockable relative to the fixed element (20) by the first locking device, wherein the adjuster device (1) has a second locking device for run-off protection, wherein the second locking device comprises an adapter plate (11) and a blocking element (21), wherein the blocking element (21) is arranged non-rotatably on the fixed element (20) and the adapter plate (11) is arranged rotatably about the central axis (2), wherein, in a blocking situation, a disengaging movement of the non-rotatable blocking element (11) along an axis running parallel to the central axis (2) is prevented by the adapter plate (11), wherein the adjustable element (10) is drivable via the adapter plate (11), and wherein the adapter plate (11) and the adjustable element (10) are configured in such a manner that, during the transition from a blocking situation into a non-blocking situation, the adapter plate (11) releases the path for the disengaging movement for the blocking element (21), and the adjustable element (10) is drivable in such a manner that the rotation of the adjustable element (10) brings about the disengaging movement, wherein the adjustable element (10) is rotatable relative to the fixed element (20) before the disengaging movement is released for the blocking element (21), wherein the adapter plate (11) comprises a blocking bolt (16) and the blocking element (21) comprises a projection (24), **characterized in that** in a blocking situation, blocking bolt (16) and projection (24) are arranged one above the other along a direction running parallel to the central axis (2) and, during the transition from the blocking situation into the non-blocking situation, are arranged offset with respect to each other along a direction running parallel to the central axis (2).

2. Adjuster device (1) according to Claim 1 wherein the adapter plate (11) has an adapter plate web (12) with the projection (24), wherein the adapter plate (11) and the adapter plate web (12) are configured in such a manner that, when the adapter plate (11) is actuated, the adapter plate web (12) is moved with a delay with respect to the adapter plate (11).

3. Adjuster device (1) according to one of the preceding claims, wherein the adjustable element (10) has a toothed structure (13), wherein, in the blocking situation, the toothed structure (13) interacts in a form-fitting manner with the blocking element (21) in a direction perpendicular to the central axis (21) such that the rotation of the adjustable element (10) about the central axis (2) is restricted, and wherein, during the transition from the blocking situation into the non-blocking situation, the rotation of the toothed structure (13) brings about the disengaging movement.

4. Adjuster device (1) according to one of the preceding claims, wherein the adapter plate (11) takes up a primary position in the blocking situation and in the non-blocking situation and a secondary position during the transition from the blocking situation into the non-blocking situation.

5. Adjuster device (1) according to one of the preceding claims, wherein the adjuster device (1) comprises a spiral spring (25), wherein the adapter plate (11) is transferrable from one of the secondary positions into the primary position by the resetting force of the spiral spring.

6. Adjuster device (1) according to one of the preceding claims, wherein the adapter plate (11) and the blocking element (21) are designed in such a manner that, after the disengaging movement is finished, the blocking element (21) is prevented from carrying out an engaging movement.

7. Adjuster device (1) according to one of the preceding claims, wherein the blocking element (21) comprises a blocking spring element (22), wherein, in the blocking situation, the blocking spring element (22) interacts in a form-fitting manner along a direction running parallel to the central axis (2) with the adapter plate (11), in particular with the blocking bolt (16) of the adapter plate (11), and, in the non-blocking situation, when the primary position of the adapter plate (11) is taken up, interacts in a force-fitting manner with the adapter plate (11) in such a manner that an engaging movement is prevented.

8. Adjuster device (1) according to Claim 7, wherein the adapter plate (11) comprises the blocking spring element (22), wherein, in the blocking situation, the blocking spring element (22) interacts in a form-fitting manner along a direction running parallel to the central axis (2) with the blocking element (21), and, in the non-blocking situation, when the primary position of the adapter plate (11) is taken up, interacts in a force-fitting manner with the blocking element (21) in such a manner that an engaging movement is prevented.

9. Adjuster device (1) according to Claim 7 or 8, wherein the blocking spring element (22) is a leaf spring, a leg spring and/or a tension or compression spring.

10. Adjuster device (1) according to one of the preceding claims, wherein a lever or other actuating means is operatively connected to the adapter plate (11) in such a manner that, when the lever or the actuating means is actuated, the adapter plate (11) is rotated.

## Revendications

1. Dispositif de réglage (1) comprenant un élément fixe (20), un élément réglable (10) et un premier dispositif de verrouillage, l'élément réglable (10) étant monté de manière à pouvoir tourner par rapport à l'élément fixe (20) autour d'un axe central (2) et l'élément réglable (10) pouvant être verrouillé par rapport à l'élément fixe (20) au moyen du premier dispositif de verrouillage, le dispositif de réglage (1) comprenant un deuxième dispositif de verrouillage servant à empêcher un mouvement de roulement, le deuxième dispositif de verrouillage comportant une plaque adaptatrice (11) et un élément de blocage (21), l'élément de blocage (21) étant disposé de manière bloquée en rotation sur l'élément fixe (20) et la plaque adaptatrice (11) étant disposée de manière à pouvoir tourner autour de l'axe central (2), un mouvement de dégagement de l'élément de blocage (11) bloqué en rotation le long d'un axe s'étendant parallèlement à l'axe central (2) étant empêché au moyen de la plaque adaptatrice (11) dans une situation de blocage, l'élément réglable (10) pouvant être entraîné par le biais de la plaque adaptatrice (11), et la plaque adaptatrice (11) et l'élément réglable (10) étant configurés de telle sorte que, lors de la transition d'une situation de blocage à une situation de non blocage, la plaque adaptatrice (11) libère la voie pour le mouvement de dégagement pour l'élément de blocage (21) et l'élément réglable (10) peut être entraîné de telle sorte que la rotation de l'élément réglable (10) provoque le mouvement de dégagement, l'élément réglable (10) pouvant tourner par rapport à l'élément fixe (20) avant que le mouvement de dégagement pour l'élément de blocage (21) ne soit libéré, la plaque adaptatrice (11) comportant un tenon de blocage (16) et l'élément de blocage (21) comportant une saillie (24), **caractérisé en ce que**, dans une situation de blocage, le tenon de blocage (16) et la saillie (24) sont superposés le long d'une direction s'étendant parallèlement à l'axe central (2) et sont, lors de la transition de la situation de blocage à la situation de non blocage, disposés de manière décalée l'un par rapport à l'autre le long d'une direction s'étendant parallèlement à l'axe central (2).

2. Dispositif de réglage (1) selon la revendication 1, dans lequel la plaque adaptatrice (11) comprend une nervure de plaque adaptatrice (12) dotée de la saillie (24), dans lequel la plaque adaptatrice (11) et la nervure de plaque adaptatrice (12) sont configurées de telle sorte que, lors de l'actionnement de la plaque adaptatrice (11), la nervure de plaque adaptatrice (12) est déplacée de manière retardée par rapport à la plaque adaptatrice (11).

3. Dispositif de réglage (1) selon l'une quelconque des revendications précédentes, dans lequel l'élément réglable (10) comprend une structure dentée (13), dans lequel la structure dentée (13) coopère par complémentarité de forme avec l'élément de blocage (21) dans une direction perpendiculaire à l'axe central (21) dans la situation de blocage de telle sorte que la rotation de l'élément réglable (10) autour de l'axe central (2) soit limitée, et dans lequel, lors de la transition de la situation de blocage à la situation de non blocage, la rotation de la structure dentée (13) provoque le mouvement de dégagement.

4. Dispositif de réglage (1) selon l'une quelconque des revendications précédentes, dans lequel la plaque adaptatrice (11) adopte une position primaire dans la situation de blocage et dans la situation de non blocage et une position secondaire lors de la transition de la situation de blocage à la situation de non blocage.

5. Dispositif de réglage (1) selon l'une quelconque des revendications précédentes, dans lequel le dispositif de réglage (1) comporte un ressort en spirale (25), dans lequel la plaque adaptatrice (11) peut être transférée de l'une des positions secondaires à la position primaire sous l'effet de la force de rappel du ressort en spirale.

6. Dispositif de réglage (1) selon l'une quelconque des revendications précédentes, dans lequel la plaque adaptatrice (11) et l'élément de blocage (21) sont réalisés de telle sorte qu'une fois le mouvement de dégagement terminé, l'élément de blocage (21) est empêché d'effectuer un mouvement d'engagement.

7. Dispositif de réglage (1) selon l'une quelconque des revendications précédentes, dans lequel l'élément de blocage (21) comporte un élément ressort de blocage (22), dans lequel l'élément ressort de blocage (22) coopère, dans la situation de blocage, par complémentarité de forme avec la plaque adaptatrice (11), en particulier avec le tenon de blocage (16) de la plaque adaptatrice (11), le long d'une direction s'étendant parallèlement à l'axe central (2) et, dans la position de non blocage, lorsque la position primaire de la plaque adaptatrice (11) est adoptée, coopère par force avec la plaque adaptatrice (11) de telle sorte qu'un mouvement d'engagement soit empêché.

8. Dispositif de réglage (1) selon la revendication 7, dans lequel la plaque adaptatrice (11) comporte l'élément ressort de blocage (22), dans lequel l'élément ressort de blocage (22) coopère, dans la situation de blocage, par complémentarité de forme avec l'élément de blocage (21) le long d'une direction s'étendant parallèlement à l'axe central (2) et, dans la position de non blocage, lorsque la position primaire de la plaque adaptatrice (11) est adoptée, coopère par force avec l'élément de blocage (21) de telle sorte qu'un mouvement d'engagement soit empêché.

9. Dispositif de réglage (1) selon la revendication 7 ou 8, dans lequel l'élément ressort de blocage (22) est un ressort à lame, un ressort à branches et/ou un ressort de traction ou de compression.

10. Dispositif de réglage (1) selon l'une quelconque des revendications précédentes, dans lequel un levier ou un autre moyen d'actionnement est en liaison fonctionnelle avec la plaque adaptatrice (11) de telle sorte que la plaque adaptatrice (11) soit entraînée en rotation lors d'un actionnement du levier ou du moyen d'actionnement.
